(19) **Europäisches Patentamt / European Patent Office / Office européen des brevets**

(11) **EP 4 524 996 A1**

(12) **EUROPEAN PATENT APPLICATION**
published in accordance with Art. 153(4) EPC

(43) Date of publication:
**19.03.2025 Bulletin 2025/12**

(21) Application number: **23803423.5**

(22) Date of filing: **25.04.2023**

(51) International Patent Classification (IPC):
$H01B\ 1/06\ ^{(2006.01)}$   $C01G\ 25/00\ ^{(2006.01)}$
$H01B\ 1/08\ ^{(2006.01)}$   $H01G\ 11/06\ ^{(2013.01)}$
$H01G\ 11/46\ ^{(2013.01)}$   $H01G\ 11/52\ ^{(2013.01)}$
$H01G\ 11/56\ ^{(2013.01)}$   $H01M\ 10/052\ ^{(2010.01)}$
$H01M\ 10/0562\ ^{(2010.01)}$

(52) Cooperative Patent Classification (CPC):
**C01G 25/00; H01B 1/06; H01B 1/08; H01G 11/06; H01G 11/46; H01G 11/52; H01G 11/56; H01M 10/052; H01M 10/0562;** Y02E 60/10

(86) International application number:
**PCT/JP2023/016263**

(87) International publication number:
**WO 2023/218942 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.05.2022 JP 2022077491**

(71) Applicant: **Niterra Co., Ltd.**
**Nagoya-shi, Aichi 461-0005 (JP)**

(72) Inventors:
• **SHISHIHARA, Daisuke**
**Nagoya-shi**
**Aichi 461-0005 (JP)**

• **OTANI, Kazushi**
**Nagoya-shi**
**Aichi 461-0005 (JP)**
• **TAKEUCHI, Yuki**
**Nagoya-shi**
**Aichi 461-0005 (JP)**
• **HIKOSAKA, Hideaki**
**Nagoya-shi**
**Aichi 461-0005 (JP)**
• **SATO, Motohiko**
**Nagoya-shi**
**Aichi 461-0005 (JP)**

(74) Representative: **Zimmermann & Partner Patentanwälte mbB**
**Postfach 330 920**
**80069 München (DE)**

(54) **ELECTROLYTE POWDER, SHEET, ELECTROCHEMICAL ELEMENT, AND ELECTRIC POWER STORAGE DEVICE**

(57)     To provide an electrolyte powder, a sheet, an electrochemical element, and a power storage device, which can facilitate quality control. The electrolyte powder has a garnet-type crystal structure containing Li, Zr, and La, and satisfies $b^* \geq 2$ in chromatic coordinates of CIE 1976L*a*b* color space. In the electrolyte powder, $a^* \geq 0$ may be satisfied, or a chroma defined by $c^* = \{(a^*)^2 + (b^*)^2\}^{1/2}$ may satisfy $2 \leq c^* \leq 10$. The sheet, electrochemical element, and power storage device each contain the electrolyte powder.

EP 4 524 996 A1

*FIG. 1*

## Description

TECHNICAL FIELD

The present invention relates to an electrolyte powder which has a garnet-type crystal structure containing Li, Zr, and La; to a sheet containing the electrolyte powder; to an electrochemical element; and to a power storage device.

BACKGROUND ART

As described in Patent Literature 1, an electrolyte powder which has a garnet-type crystal structure containing Li, Zr, and La serves as a material forming a sheet or an electrochemical element. As described in Patent Literature 2, a specific surface area determined through a gas adsorption method is an index for quality control of electrolyte powder.

CITATION LIST

PATENT LITERATURE

Patent Literature 1: JP2016-40767A

Patent Literature 2: JP2021-93308A

SUMMARY OF INVENTION

TECHNICAL PROBLEM

However, in the aforementioned quality control, it is cumbersome to employ, as an index, the specific surface area determined through a gas adsorption method.

The present invention has been conceived in order to solve the above problem, and an object of the invention is to provide an electrolyte powder, a sheet, an electrochemical element, and a power storage device, each facilitating quality control.

SOLUTION TO PROBLEM

In a first aspect to achieve the above object, there is provided an electrolyte powder which has a garnet-type crystal structure containing Li, Zr, and La, which powder satisfies $b^* \geq 2$ in chromatic coordinates of CIE 1976L*a*b* color space.

In a second aspect, $a^*\text{-} \geq 0$ is satisfied in the first aspect.

In a third aspect, a chroma defined by $c^* = \{(a^*)^2+(b^*)^2\}^{1/2}$ satisfies $2 \leq c^* \leq 10$ in the first or second aspect.

In a fourth aspect, $80 \leq L^* \leq 97$ is satisfied in any of the first to third aspects.

In a fifth aspect, the crystal structure of the electrolyte powder in any of the first to fourth aspects further contains Mg and Sr.

In a sixth aspect, there is provided a sheet containing an electrolyte powder as recited in any of the first to fifth aspects.

In a seventh aspect, there is provided an electrochemical element containing an electrolyte powder as recited in any of the first to fifth aspects.

In an eighth aspect, there is provided a power storage device having a plurality of electrode layers and a separator which separates the plurality of electrode layers. In the power storage device, at least one of the plurality of electrode layers and the separator contains an electrolyte powder as recited in any of the first to fifth aspects.

In a ninth aspect, there is provided a power storage device having a plurality of electrode layers including a current-collecting layer, and a separator which separates the plurality of electrode layers. The power storage device has a protective layer disposed between the separator and any of the electrode layers or disposed on the current-collecting layer, and the protective layer contains an electrolyte powder as recited in any of the first to fifth aspects.

ADVANTAGEOUS EFFECTS OF INVENTION

Easy quality control can be realized by the electrolyte powder, sheet, electrochemical element, and power storage device of the present invention.

BRIEF DESCRIPTION OF DRAWINGS

FIG. 1 shows a cross-sectional view of an electrochemical element of a first embodiment.

FIG. 2 shows a schematic view of a garnet-type crystal structure.

FIG. 3 shows a cross-sectional view of an electrochemical element of a second embodiment.

FIG. 4 shows a cross-sectional view of an electrochemical element of a third embodiment.

FIG. 5 shows a graph showing correlation of b* with the specific surface area of electrolyte powder.

FIG. 6 shows a graph showing correlation of c* with the specific surface area of electrolyte powder.

DESCRIPTION OF EMBODIMENTS

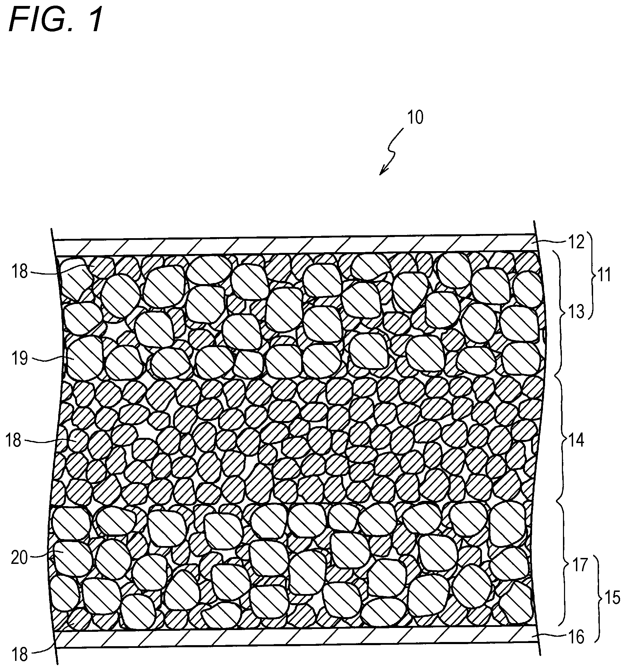

Hereinafter, a preferred embodiment of the present invention will be described with reference to attached drawings. FIG. 1 is a schematic cross-section of an electrochemical element 10. The electrochemical element 10 of the present embodiment corresponds to a lithium ion solid battery (i.e., power storage device) in which power generating elements are formed of a solid material. The expression "a power generating element is formed of a solid material" refers to a case in which a main body of the power generating element is formed of a solid material, and also encompasses an embodiment in which the main body has been impregnated with liquid.

The electrochemical element 10 includes, from top to bottom, a positive electrode layer 11, an electrolyte layer 14, and a negative electrode layer 15. The positive electrode layer 11, the electrolyte layer 14, and the negative electrode layer 15 are built in a case (not illustrated).

The positive electrode layer 11 includes an active material layer 13 and a current-collecting layer 12 stacked thereon. The current-collecting layer 12 is a member having an electrical conductivity. Examples of the material of the current-collecting layer 12 include metals selected from among Ni, Ti, Fe, and Al; alloys each containing two or more of such metals; stainless steel; and carbon material.

The active material layer 13 contains an electrolyte powder 18 and an active material 19. For lowering the electrical resistance of the active material layer 13, the active material layer 13 may contain a conducting aid. Examples of the conducting aid include carbon black, acetylene black, Ketjen black, carbon fiber, Ni, Pt, and Ag.

Examples of the active material 19 include a metal oxide in which the metal includes a transition metal, a sulfur-containing active material, and an organic active material. Examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_2$, $LiNi_{1/3}Mn_{1/3}Co_{1/3}O_2$, and $LiFePO_4$.

In order to suppress reaction between the active material 19 and the electrolyte powder 18, a coating layer may be provided on the active material 19. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoxydimethane; and phenazine oxide.

The electrolyte layer 14 contains the electrolyte powder 18. The electrolyte layer 14 may contain a binder or an electrolytic solution in which an electrolyte salt is dissolved in a solvent. No particular limitation is imposed on the solvent of the electrolytic solution, so long as the solvent can dissolve the electrolyte salt. Examples of the solvent include a carbonate ester, an aliphatic carboxylate ester, a phosphate ester, a $\gamma$-lactone, an ether, a nitrile, sulforane, dimethylsulfoxide, a fluorous solvent, and an ionic liquid. These solvents may be used in combination. In the present embodiment, the electrolyte layer 14 corresponds to a separator. The separator isolates the positive electrode layer 11 from the negative electrode layer 15 and achieves electrical insulation therebetween.

No particular limitation is imposed on the binder, so long as the binder can achieve binding of the electrolyte powder 18. Examples of the binder include rubber-like polymers such as fluorinated resin, polyolefin, polyimide, polyvinylpyrrolidone, poly(vinyl alcohol), cellulose ether, and styrene-butadiene rubber. Examples of the fluorinated resin include vinylidene fluoride-based polymer, poly(chlorotrifluoroethylene), poly(vinyl fluoride), 4-fluoroethylene-perfluoroalkyl vinyl ether copolymer, 4-fluoroethylene-6-fluoropropylene copolymer, ethylene-4-fluoroethylene copolymer, and ethylene-chlorotrifluoroethylene copolymer.

The negative electrode layer 15 includes the active material layer 17 and a current-collecting layer 16 stacked thereon. The current-collecting layer 16 is a member having an electrical conductivity. Examples of the material of the current-collecting layer 16 include metals selected from among Ni, Ti, Fe, Cu, and Si; alloys each containing two or more of such metals; stainless steel; and carbon material.

The active material layer 17 contains the electrolyte powder 18 and the active material 20. In order to lower the resistance of the active material layer 17, the active material layer 17 may further contain a conducting aid. Examples of the conducting aid include carbon black, acetylene black, Ketjen black, carbon fiber, Ni, Pt, and Ag. Examples of the active material 20 include Li, Li-Al alloy, $Li_4Ti_5O_{12}$, graphite, In, Si, Si-Li alloy, and SiO. Similar to the electrolyte layer 14, the active material layers 13, 17 may further contain an electrolytic solution or a binder.

The electrochemical element 10 is fabricated through, for example, the following procedure. As an example, the case where the electrochemical element 10 contains an electrolytic solution and a binder will be described. Specifically, a lithium salt is dissolved in an organic solvent, and the solution is mixed with the electrolyte powder 18. To the resultant mixture, a solution of a binder dissolved in a solvent is added with mixing, to thereby form a slurry. The slurry is formed into a tape, which is then dried, to thereby yield a green sheet (electrolyte sheet) for providing the electrolyte layer 14.

Separately, the solution of the lithium salt dissolved in the organic solvent is mixed with the electrolyte powder 18. To the resultant mixture, the active material 19 and a solution of the binder dissolved in a solvent are sequentially added with mixing, to thereby form a slurry. The slurry is formed into a tape on the current-collecting layer 12 and then dried to form a green sheet (i.e., a positive electrode sheet) for providing the positive electrode layer 11.

To the mixture of the solution of the lithium salt dissolved in the organic solvent with the electrolyte powder 18, the active material 20 is added with mixing, and a solution of the binder dissolved in a solvent is sequentially added with mixing, to thereby form a slurry. The slurry is formed into a tape on the current-collecting layer 16 and then dried to form a green sheet (i.e., a negative electrode sheet) for providing the negative electrode layer 15.

The electrolyte sheet, the positive electrode sheet, and the negative electrode sheet are cut into a shape of interest. The cut products thereof are stacked from the positive electrode sheet, the electrolyte sheet, and the negative electrode sheet in that sequence, and the stacked product is pressed to integrate the sheets. To each of the current-collecting layers 12 and 16, a terminal (not illustrated) is connected, and the product is built in a case (not illustrated), and the case is closed. Thus, an electrochemical element 10 in which the positive electrode layer 11, the electrolyte layer 14, and the negative electrode layer 15 stacked in that sequence can be fabricated. Needless to say, it is possible that at least one of the positive electrode layer 11, the electrolyte layer 14, and the negative electrode layer 15 does not contain at least one of the electrolytic solution and the binder.

The electrolyte powder 18 is formed of a complex oxide having a garnet-type crystal structure containing Li, Zr, and La or a garnet-like crystal structure. Generally, the garnet-type crustal structure referred to in the present specification is represented by formula $C_3A_2B_3O_{12}$.

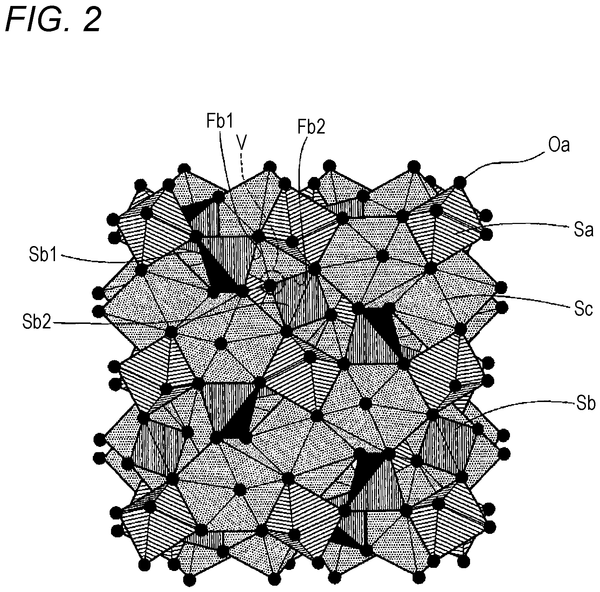

FIG. 2 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The electrolyte powder 18 generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, wherein Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The garnet-type crystal structure may be determined through X-ray diffraction. The garnet-type crystal structure exhibits an XRD pattern similar to that of an X-ray diffraction file No. 422259 ($Li_7La_3Zr_2O_{12}$) of CSD (Cambridge Structural Database). As compared with No. 422259, the electrolyte powder 18 may have differences in the type of elements forming oxide, the Li concentration, and the like. Therefore, diffraction angle and intensity ratio may vary. A typical crystal in relation to the above is a cubic system (space group: Ia-3d ("-" is an over-line representing rotary inversion), JCPDS:84-1753).

A typical example of the material of the electrolyte powder 18 is $Li_7La_3Zr_2O_{12}$. In electrolyte powder 18, a part of the elements forming $Li_7La_3Zr_2O_{12}$ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the electrolyte powder 18 include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$,

$Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly, the electrolyte powder 18 preferably contains at least one of Mg and element A (A represents at least one element selected from the group consisting of Ca, Sr, and Ba), and satisfies all the following conditions (1) to (3) regarding mole proportions of the elements. Alternatively, the electrolyte powder 18 preferably contains both Mg and element A, and satisfies all the following conditions (4) to (6) regarding mole proportions of the elements. From the viewpoint of elevating the ion conductivity of the electrolyte powder 18, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

The electrolyte powder 18 is characterized by the chromatic coordinates of CIE 1976L*a*b* color space, which includes quantities in relation to lightness, chroma, and hue. The CIE 1976L*a*b* color space is a substantially even 3-dimensional color space which has been recommended by CIE (commission international de l'eclairage) in 1976 and obtained by plotting L*, a*, and b* in Cartesian coordinates. The CIE 1976L*a*b* color space is stipulated by JIS Z8781-4:2013.

In the CIE 1976L*a*b* color space, L* represents lightness, and a* and b* represent chromaticity (hue and chroma). The a* and b* each represent a color direction. Specifically, a* denotes a red direction; -a* a green direction; b* a yellow direction; and -b* a blue direction. The greater the relevant value, the more vivid the color. If the value approaches the origin of the coordinates, the color becomes darker. The chroma c* is represented by $\{(a^*)2+(b^*)2\}\ 1/2$ (square root of the sum of squares of a* and b*). L*, a*, and b* can be determined by means of a spectrophotometric colorimeter CM-5 (product of KONICA MINOLTA JAPAN, INC.).

In the electrolyte powder 18 having a garnet-type crystal structure containing Li, Zr, and La, a positive correlation is found between the specific surface area (m2/g) determined through the gas adsorption method (BET method) and b*. Although the values of L*, a*, and b* cannot completely be controlled in an independent manner, an electrolyte powder having a small specific surface area can be eliminated, when b*≥2 is satisfied. Since measuring b* of the electrolyte powder 18 is easier than determining the specific surface area by the gas adsorption method, quality control can be easily achieved by measuring b*. Notably, the maximum value of b* is 60, from the viewpoint of, for example, detection of migrated impurities.

No precise reason has been elucidated for the positive correlation between the specific surface area and b* of an electrolyte powder. However, when an electrolyte powder is pulverized with a greater energy, the powder becomes vivid yellow. The inventors assume that the particle size of the powder is reduced through pulverization, and a surface layer having deteriorated crystallinity has emerged on the powder, resulting in the yellow color, and that the value of b* increases as the specific surface area of the electrolyte powder 18 increases.

In addition to the electrolyte powder 18, any of the electrolyte layer 14 and the active material layers 13, 17 may further contain one or more additional solid electrolytes. Examples of the additional solid electrolyte include crystalline or amorphous oxide-type solid electrolytes such as a perovskite-type solid electrolyte, a NASICON-type solid electrolyte, and a LISICON-type solid electrolyte, and hydride-type solid electrolytes.

Examples of the perovskite-type solid electrolyte include an oxide containing at least Li, Ti, and La (e.g., La2/3-XLi3XTiO3). Examples of the NASICON-type solid electrolyte include an oxide containing at least Li and M (M represents one or more elements selected from Ti, Zr, and Ge) and P (e.g., Li(Al,Ti)2(PO4)3 or Li(Al,Ge)2(PO4)3). Examples of the LISICON-type solid electrolyte include Li14Zn(GeO4)4. Examples of the hydride-type solid electrolyte include alkali metal or alkaline earth metal hydrides each containing at least one element belonging to group 13 element (e.g., B, Al, Ga, In, and Ta) of the 18-group periodic table. Specific examples thereof include LiBH4 and LiAlH4.

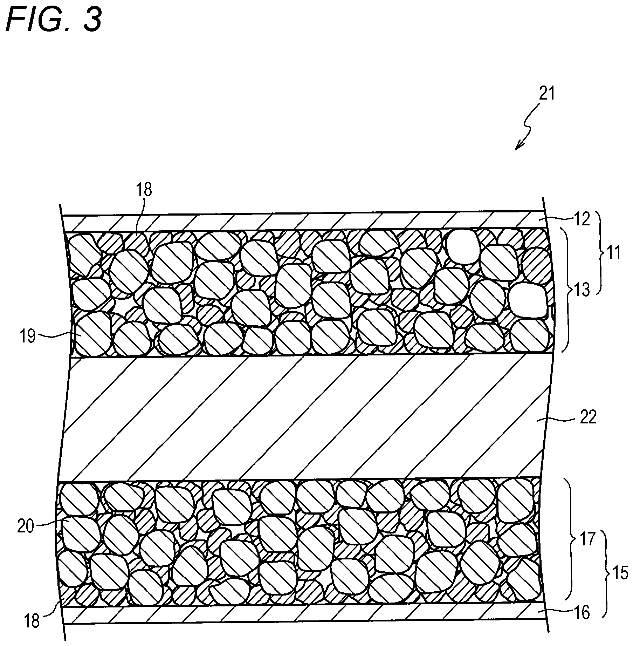

A second embodiment will next be described, with reference to FIG. 3. The above-described first embodiment is directed to a secondary battery having a power generating element formed of the electrolyte powder 18 used as a solid material. However, the next described second embodiment is a liquid-type lithium ion battery employing an electrolyte formed of the electrolyte powder 18 in an organic solvent. The same members as employed in the first embodiment are denoted by the same reference numerals, and further descriptions thereof are omitted. FIG. 3 is a cross-sectional view of the electrochemical element 21 (power storage device) of the second embodiment.

The electrochemical element 21 includes, from top to bottom, a positive electrode layer 11, a separator 22, and a negative electrode layer 15. These elements are built in a case (not illustrated). The separator 22 is formed of a porous body which is resistive to active material 19, 20 contained in the positive electrode layer 11 and the negative electrode layer 15 and to an electrolytic solution and which allows passage of lithium ions but has no electron conductivity. Examples of the material of the separator 22 include a nonwoven fabric and a porous membrane formed of cellulose, polypropylene, polyethylene, etc. The electrolytic solution is the same as employed in the first embodiment, and detailed descriptions thereof are omitted.

The electrochemical element 21 of the second embodiment includes the positive electrode layer 11 and the negative electrode layer 15 each containing the electrolyte powder 18. Thus, similar to the power storage device 11 of the first embodiment, quality control of the electrolyte powder 18 can be facilitated.

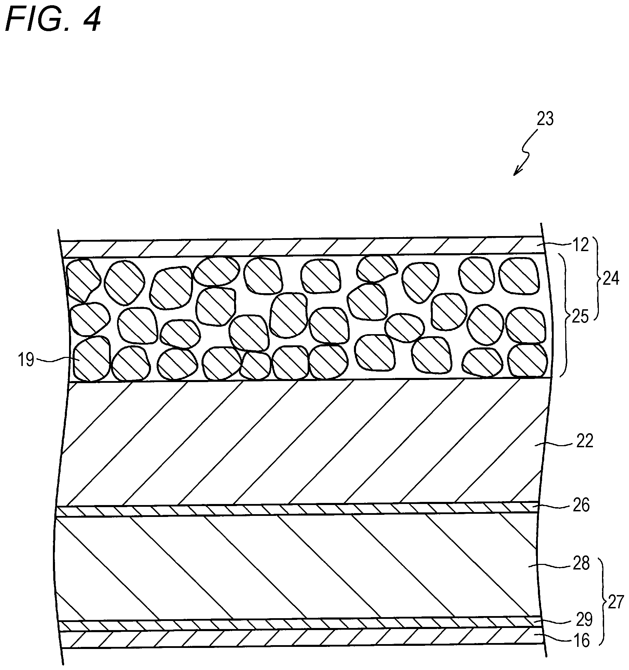

A third embodiment will next be described, with reference to FIG. 4. The above-described first and second embodiments are directed to the case where the electrolyte powder 18 is contained in the positive electrode layer 11, the electrolyte layer 14, and the negative electrode layer 15. However, the next described third embodiment corresponds to a case where protective layers 25, 28 contain the electrolyte powder 18. The same members as employed in the first and second embodiments are denoted by the same reference numerals, and detailed descriptions thereof are omitted. FIG. 4 is a cross-sectional view of the electrochemical element 23 (power storage device) of the third embodiment.

The electrochemical element 23 includes, from top to bottom, a positive electrode layer 24, a separator 22, and a negative electrode layer 26. These elements are built in a case (not illustrated). The electrochemical element 23 is a liquid-type lithium ion battery employing an electrolyte containing an organic solvent.

The positive electrode layer 24 includes an active material layer 25 and a current-collecting layer 12 disposed on active material layer 25. The active material layer 25 contains an active material 19. In order to lower the resistance of the active material layer 25, the active material layer 25 may further contain a conducting aid. Examples of the conducting aid include carbon black, acetylene black, Ketjen black, carbon fiber, Ni, Pt, and Ag.

Between the separator 22 and the negative electrode layer 27, a protective layer 26 is disposed. The protective layer 26 contains the electrolyte powder 18.

The negative electrode layer 27 includes, the active material layer 28, the protective layer 29, and a current-collecting layer 16, which are stacked from top to bottom. The active material layer 28 is formed from, for example, Li, Li-Al alloy, Li-Sn alloy, Li-Si alloy, Li-Mg alloy, Li-Si alloy, or Si-Li alloy. The protective layer 29 contains the electrolyte powder 18. The protective layers 26, 29 are disposed through sheet lamination, application onto the separator 22 or the current-collecting layer 16, or a similar technique.

Since the electrolyte powder 18 having a garnet-type crystal structure containing Li, La, Zr, and O is resistive to chemical reduction by metallic lithium present in the active material layer 28, stability in operation of the electrochemical element 23 is enhanced. In addition, the protective layer 26 present between the active material layer 28 and the separator 22 suppresses short-circuit which would otherwise be caused by dendritic growth of metallic lithium. The protective layer 29 present between the active material layer 28 and the current-collecting layer 16 prevents degradation of the current-collecting layer 16.

EXAMPLES

The present invention will next be described in more detail by way of Examples, which should not be construed as limiting the invention thereto.

(Example 1)

$Li_2CO_3$, MgO, $La(OH)_3$, $SrCO_3$, and $ZrO_2$ were weighed in specific amounts so as to form $Li_{6.95}Mg_{0.15}La_{2.75}Sr_{0.25}Zr_{2.0}O_{12}$. In consideration of volatilization of Li during firing, the amount of $Li_2CO_3$ was adjusted in about 15 mol% excess (as reduced to Li). The thus-weighed raw materials and ethanol were put into a nylon-made pot with zirconia balls, and the mixture was subjected to pulverization with the ball mill for 15 hours. The resultant slurry was removed from the pot and dried, and then fired on an MgO plate at 1,100°C for 15 hours. After firing, the powder was further pulverized and put into a sheath made of MgO. Further firing was conducted at 1,100°C for 4 hours. After the additional firing operation, the powder was further pulverized in a glove box under argon, to thereby yield an electrolyte powder (hereinafter referred to as "LLZ").

Through a powder X-ray diffraction method, the crystal structure of the LLZ was determined to be a garnet type. The median diameter (D50) on particle size distribution of the LLZ, as determined through a laser diffraction/scattering

method, was 74 μm.

The LLZ was further pulverized by means of a dry jet mill (Nano Jetmizer (registered trademark) NJ-50, product of Aishin Nano Technologies, Co., Ltd.). In pulverization, LLZ was caused to pass through the jet mill once at a jet nozzle pressure of 2.0 MPa and a milling rate of 960 g/hr in a nitrogen atmosphere, to thereby yield an electrolyte powder of Example 1.

(Example 2)

The procedure of Example 1 was repeated, except that LLZ was pulverized by causing LLZ to pass through the jet mill three times in total at a jet nozzle pressure of 2.0 MPa and a milling rate of 960 g/hr in each operation of pulverization, to thereby yield an electrolyte powder of Example 2.

(Example 3)

The procedure of Example 1 was repeated, except that LLZ was pulverized by causing LLZ to pass through the jet mill three times in total at a jet nozzle pressure of 2.0 MPa and a milling rate of 480 g/hr in each operation of pulverization, to thereby yield an electrolyte powder of Example 3.

(Example 4)

The procedure of Example 1 was repeated, except that pulverization by means of a jet mill was changed to wet pulverization, including putting LLZ (100 g) and Fluorinert (registered trademark) (125 mL) into a planetary ball mill (Pulverisette-6, Fritsh: a container (capacity: 250 $cm^3$) made of zirconia, and zirconia balls (diameter; 4 mm); wet-pulverizing in an argon atmosphere at 400 rpm for 5 hours; and drying, to thereby yield an electrolyte powder of Example 4.

(Example 5)

The procedure of Example 1 was repeated, except that electrolyte powder (hereinafter referred to as "LLZ-1") was prepared so as to have a formula: $Li_{6.75}Mg_{0.15}La_{2.75}Sr_{0.25}Zr_{2.0}O_{12}$, to thereby yield an electrolyte powder of Example 5. The thus-prepared LLZ-1 was found to have a garnet-type crystal structure as determined through a powder X-ray diffraction method.

(Example 6)

The procedure of Example 1 was repeated, except that electrolyte powder (hereinafter referred to as "LLZ-2") was prepared so as to have a formula: $Li_{6.55}Mg_{0.15}La_{2.75}Sr_{0.25}Zr_{2.0}O_{12}$, to thereby yield an electrolyte powder of Example 6. The thus-prepared LLZ-2 was found to have a garnet-type crystal structure as determined through a powder X-ray diffraction method.

(Example 7)

The procedure of Example 1 was repeated, except that electrolyte powder (hereinafter referred to as "LLZ-3 ") was prepared so as to have a formula: $Li_{6.95}Mg_{0.1}La_{2.75}Sr_{0.2}Zr_{2.0}O_{12}$, to thereby yield an electrolyte powder of Example 7. The thus-prepared LLZ-3 was found to have a garnet-type crystal structure as determined through a powder X-ray diffraction method.

(Example 8)

The procedure of Example 1 was repeated, except that electrolyte powder (hereinafter referred to as "LLZ-4") was prepared so as to have a formula: $Li_{6.95}Mg_{0.2}La_{2.75}Sr_{0.4}Zr_{2.0}O_{12}$, to thereby yield an electrolyte powder of Example 8. The thus-prepared LLZ-4 was found to have a garnet-type crystal structure as determined through a powder X-ray diffraction method.

(Comparative Example 1)

The procedure of Example 1 was repeated, except that LLZ was roughly pulverized by means of a mortar for about 1 minute, instead of conducting pulverization by means of a jet mill, to thereby yield an electrolyte powder of Comparative Example 1.

(Comparative Example 2)

The procedure of Example 1 was repeated, except that LLZ was pulverized by means of a mortar for 30 minutes, instead of conducting pulverization by means of a jet mill, to thereby yield an electrolyte powder of Comparative Example 2.

(Comparative Example 3)

$Li_{6.6}La_3Ta_{0.4}Zr_{1.6}O_{12}$ having a garnet-type crystal structure was wet-pulverized in which LLZ (100 g) and Fluorinert (registered trademark) (125 mL) were put into a planetary ball mill (Pulverisette-6, Fritsh: a container (capacity: 250 cm$^3$) made of zirconia, and zirconia balls (diameter; 4 mm); the milled product was wet-pulverized in an argon atmosphere at 200 rpm for 1 hour; and the product was dried, to thereby yield an electrolyte powder of Comparative Example 3.

(Color measurement)

The color of each of the electrolyte powders of Examples 1 to 8 and Comparative Examples 1 to 3 was measured by means of a spectrophotometric colorimeter CM-5 (product of KONICA MINOLTA JAPAN, INC.), whereby L*, a*, and b* in CIE 1976L*a*b* color space were determined. Chroma c* was determined by inputting a*,and b* into a formula: chroma $c^* = \{(a^*)^2+(b^*)^2\}_{1/2}$. Thus, chroma c* of each of the electrolyte powders of Examples 1 to 8 and Comparative Examples 1 to 3 was determined.

(Determination of particle size distribution and specific surface area)

The median diameter (D50) on particle size distribution of each of the electrolyte powders of Examples 1 to 8 and Comparative Examples 1 to 3 was determined through a laser diffraction/scattering method. Also, the specific surface area of each of the electrolyte powders of Examples 1 to 8 and Comparative Examples 1 to 3 was determined in accordance with JIS R1626:1996.

(Assessment of bonding property)

Each of the electrolyte powders of Examples 1 to 8 and Comparative Examples 1 to 3 was mixed with poly(vinylidene fluoride) dissolved in propylene carbonate, and the resultant mixture was processed by means of a planetary agitator, to thereby prepare a slurry. The relative amount of the electrolyte powder to the binder was adjusted so that the amount of the electrolyte powder with respect to the total amount of the electrolyte powder and the binder was 80 mass%. The slurry was applied onto a copper foil (thickness: 20 $\mu$m) by means of an applicator to a thickness of 50 $\mu$m, and drying was performed at 80°C for 1 hour in a reduced pressure, to thereby prepare a sheet in which a coating layer was formed on a copper foil. Such sheet products were cut into pieces (50 mm × 50 mm), and two pieces were stacked such that the coating layers were closely bonded to each other. In this state, the product was pressed (50MPa) by means of a roller press heated at 60°C, to thereby form a laminate.

To one end of the copper foil of the laminate, a delamination stress was applied toward a direction orthogonal to the plane direction of the foil. When peeling of sheet occurred by force of 0.01 N or greater, the bonding property was assessed as "good," whereas when peeling of sheet occurred by force smaller than 0.01 N, the bonding property was assessed as "bonding failure." Also, the resistivity of the laminate was measured through the AC impedance technique. When the resistivity was smaller than 45 $\Omega$/cm$^2$, the bonding property was assessed as "good," and when the resistivity was 45 $\Omega$/cm$^2$ or more, the bonding property was assessed as "bonding failure."

Table 1 shows the evaluation results of the electrolyte powders of Examples 1 to 8 and Comparative Examples 1 to 3 in terms of L*, a*, b*, c*, D50, specific surface area, and bonding property. A score of bonding property of "good" corresponds to the case when the delamination strength was 0.01 N or greater and the resistivity was smaller than 45 $\Omega$/cm$^2$, and that of "bad" corresponds to the case when the delamination strength was smaller than 0.01 N or the resistivity was 45 $\Omega$/cm$^2$ or more. As shown in Table 1, the bonding property was "good" in Examples 1 to 8, but the bonding property was "bad" in Comparative Examples 1 to 3.

[Table 1]

|  | L* | a* | b* | c* | D50 ($\mu$m) | Sp. surface area (m$^2$/g) | Bonding property |
|---|---|---|---|---|---|---|---|
| Ex. 1 | 96.0 | 0.21 | 2.0 | 2.0 | 3.9 | 1.0 | good |
| Ex. 2 | 88.6 | 0.14 | 2.4 | 2.4 | 1.8 | 1.8 | good |

(continued)

|  | L* | a* | b* | c* | D50 (μm) | Sp. surface area (m²/g) | Bonding property |
|---|---|---|---|---|---|---|---|
| Ex. 3 | 87.9 | 0.51 | 4.5 | 4.5 | 1.5 | 2.0 | good |
| Ex. 4 | 96.1 | 0.55 | 8.4 | 8.4 | 1.0 | 3.6 | good |
| Ex. 5 | 95.1 | 0.11 | 2.2 | 2.2 | 2.8 | 1.1 | good |
| Ex. 6 | 94.3 | 0.35 | 2.4 | 2.4 | 2.4 | 1.3 | good |
| Ex. 7 | 96.2 | 0.23 | 2.1 | 2.1 | 3.8 | 1.0 | good |
| Ex. 8 | 95.1 | 0.33 | 2.2 | 2.2 | 3.7 | 1.1 | good |
| Comp. Ex. 1 | 96.3 | -0.092 | 1.2 | 1.2 | 5000 | 0.1 | bad |
| Comp. Ex. 2 | 97.8 | -0.012 | 1.4 | 1.4 | 74 | 0.5 | bad |
| Comp. Ex. 3 | 94.7 | -0.036 | 1.9 | 1.9 | 8.7 | 0.6 | bad |

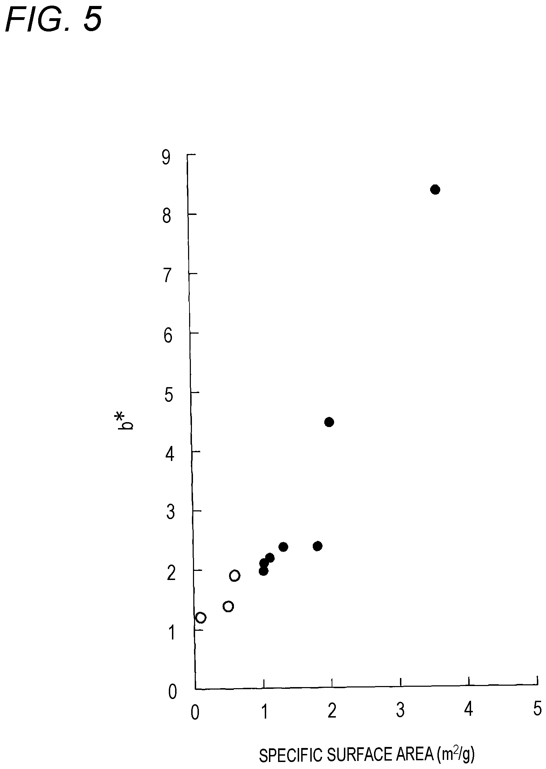

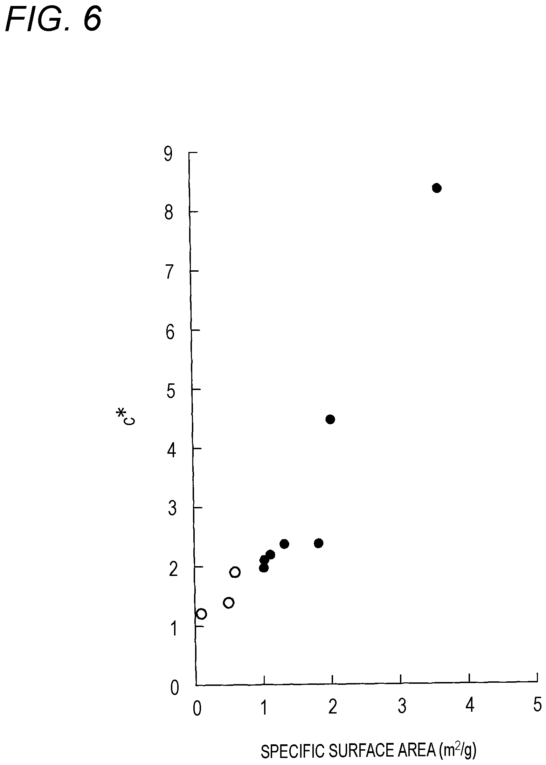

FIG. 5 is a graph showing the correlation between the specific surface area and b* of electrolyte powder in Examples 1 to 8 and Comparative Examples 1 to 3. FIG. 6 is a graph showing the correlation between the specific surface area and c* of electrolyte powder in Examples 1 to 8 and Comparative Examples 1 to 3. In FIGs. 5 and 6, filled circles denote the cases of Examples, and open circles denote the cases of Comparative Examples.

As shown in FIG. 5 and Table 1, the electrolyte powders of Examples 1 to 8 having a value of b* of 2 or greater were assessed as "good" in bonding property. As is clear from Table 1, the electrolyte powders of Examples 1 to 8 having a value of b * of 2 or greater had a specific surface area wider than 0.6 m²/g (Comparative Example 3). Therefore, an electrolyte powder having a small specific surface area can be eliminated by using a value of b* of 2 or greater as an index. The specific surface area of electrolyte powder influences various properties such as ion conductivity and interface resistance of electrolyte powder, viscosity of a slurry containing electrolyte powder, and bonding property of a sheet containing electrolyte powder. Since measuring b* of an electrolyte powder is easier than determining the specific surface area by the gas adsorption method, quality control can be easily achieved by measuring b*.

As shown in FIG. 5 and Table 1, solid electrolytes (Examples 1 to 8) each containing Li, Zr, La, Mg, and Sr exhibited a*≥0 and a strong positive correlation between specific surface area and b*. Thus, accuracy of quality control employing b* as an index can be improved. Notably, from the viewpoints of detection of contamination of impurities and the like, the allowable maximum value of a* is 60.

As shown in FIG. 6, similar to the aforementioned positive correlation between specific surface area and b*, a positive correlation is found between specific surface area and c* of solid electrolyte. Thus, an electrolyte powder having a small specific surface area can be eliminated by using a value of c* of 2 or greater as an index. The value c* includes a* relating to the red direction and the green direction, in addition to b*. Thus, a powder including a red-type impurity or a green-type impurity as well as measurement errors can be eliminated by using a value of c* of 10 or smaller as an index. Based on the electrolyte powders of Examples 1 to 8 satisfying 2≤c*≤10, a powder having a small specific surface area and a powder contaminated with an impurity or the like can be eliminated.

Lightness L* is preferably 80 or greater, since a powder contaminated with a black-type impurity can be eliminated on the basis of the preferred range of L*. Also, lightness L* is preferably 97 or smaller, since measurement errors can be eliminated on the basis of the preferred range of L*. Based on the electrolyte powders of Examples 1 to 8 satisfying 80≤L*≤97, a powder contaminated with an impurity and the like can be eliminated.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above-described embodiments, the electrochemical element 10 has the positive electrode layer 11 in which the active material layer 13 is provided on one surface of the current-collecting layer 12, and the negative electrode layer 15 in which the active material layer 17 is provided on one surface of the current-collecting layer 16. However, the present invention is not necessarily limited thereto. It should be apparent for those skilled in the art that the elements of the above embodiments can be applied to, for example, an electrochemical element in which an electrode layer having the current-collecting layer 12 provided with the active material layer 13 and the active material layer 17 on each surface (i.e., a so-called bipolar electrode). By alternatingly stacking the bipolar electrode and the electrolyte layer 14, and inserting the stacked product into a case (not illustrated), a so-called bipolar structure electrochemical element can be obtained.

The above-described first embodiment corresponds the case in which each of the active material layers 13, 17 and the electrolyte layer 14 contains the electrolyte powder 18. However, the present invention is not necessarily limited thereto. In the electrochemical element, at least one member of the active material layers 13, 17 and the electrolyte layer 14 essentially contains the electrolyte powder 18.

The above-described second embodiment corresponds the case in which each of the active material layers 13, 17 contains the electrolyte powder 18. However, the present invention is not necessarily limited thereto. In the electrochemical element 21, at least one member of the active material layers 13, 17 essentially contains the electrolyte powder 18.

The above-described third embodiment corresponds the case in which the protective layer 26 is disposed between the active material layer 28 and the separator 22, and the protective layer 29 is disposed between the current-collecting layer 16 and the active material layer 28. However, the present invention is not necessarily limited thereto. Needless to say, either of the protective layers 26, 29 may be omitted.

In the above-described embodiments, the electrolyte powder 18 has been described in detail in the case of a lithium ion battery as the electrochemical element 10. However, the present invention is not necessarily limited thereto. Examples of other electrochemical elements containing the electrolyte powder 18 include a lithium ion capacitor, a lithium-sulfur battery, a lithium-oxygen battery, and a lithium-air battery.

REFERENCE SIGNS LIST

10, 21, 23 electrochemical element (power storage device)

11 positive electrode layer (sheet, electrode layer)

14 electrolyte layer (sheet, separator)

15 negative electrode layer (sheet, electrode layer)

16 current-collecting layer

18 electrolyte powder

22 separator

26, 29 protective layer

27 negative electrode layer (electrode layer)

**Claims**

1. An electrolyte powder which has a garnet-type crystal structure containing Li, Zr, and La, which powder satisfies $b^* \geq 2$ in chromatic coordinates of CIE 1976L*a*b* color space.

2. An electrolyte powder according to claim 1, wherein $a^* \geq 0$ is satisfied in the chromatic coordinate.

3. An electrolyte powder according to claim 1 or 2, wherein a chroma defined by $c^* = \{(a^*)^2 + (b^*)^2\}^{1/2}$ satisfies $2 \leq c^* \leq 10$ in the chromatic coordinate.

4. An electrolyte powder according to claim 1 or 2, wherein $80 \leq L^* \leq 97$ is satisfied in the chromatic coordinate.

5. An electrolyte powder according to claim 1 or 2, wherein the crystal structure further includes Mg and Sr.

6. A sheet containing an electrolyte powder as recited in claim 1 or 2.

7. An electrochemical element containing an electrolyte powder as recited in claim 1 or 2.

8. A power storage device having a plurality of electrode layers and a separator which separates the plurality of electrode layers, wherein
at least one of the plurality of electrode layers and the separator contains an electrolyte powder as recited in claim 1.

9. A power storage device having a plurality of electrode layers including a current-collecting layer, and a separator which separates the plurality of electrode layers, wherein

the power storage device has a protective layer disposed between the separator and any of the electrode layers or disposed on the current-collecting layer, and
the protective layer contains an electrolyte powder as recited in claim 1.

FIG. 1

*FIG. 2*

## FIG. 3

FIG. 4

FIG. 5

## FIG. 6

## INTERNATIONAL SEARCH REPORT

| International application No. |
| --- |
| **PCT/JP2023/016263** |

**A.    CLASSIFICATION OF SUBJECT MATTER**

    *H01B 1/06*(2006.01)i; *C01G 25/00*(2006.01)i; *H01B 1/08*(2006.01)i; *H01G 11/06*(2013.01)i; *H01G 11/46*(2013.01)i; *H01G 11/52*(2013.01)i; *H01G 11/56*(2013.01)i; *H01M 10/052*(2010.01)i; *H01M 10/0562*(2010.01)i

    FI:   H01B1/06 A; H01B1/08; C01G25/00; H01G11/06; H01G11/46; H01G11/56; H01G11/52; H01M10/052; H01M10/0562

According to International Patent Classification (IPC) or to both national classification and IPC

**B.    FIELDS SEARCHED**

Minimum documentation searched (classification system followed by classification symbols)

    H01B1/06; C01G25/00; H01B1/08; H01G11/06; H01G11/46; H01G11/52; H01G11/56; H01M10/052; H01M10/0562

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2016-40767 A (NGK SPARK PLUG CO., LTD.) 24 March 2016 (2016-03-24)<br>    paragraphs [0021]-[0102] | 1-9 |
| A | JP 2021-93308 A (TAIHEIYO CEMENT CORP.) 17 June 2021 (2021-06-17)<br>    paragraphs [0050]-[0083] | 1-9 |
| A | JP 2008-10320 A (SONY CORP.) 17 January 2008 (2008-01-17)<br>    paragraphs [0020]-[0168], fig. 2 | 1-9 |
| A | JP 2010-146900 A (NISSAN MOTOR CO., LTD., KANAGAWA UNIV.) 01 July 2010 (2010-07-01)<br>    paragraphs [0008]-[0137] | 1-9 |

☐ Further documents are listed in the continuation of Box C.    ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **10 July 2023** | **18 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | International application No.<br>**PCT/JP2023/016263** |
|---|---|---|

| Patent document<br>cited in search report | Publication date<br>(day/month/year) | Patent family member(s) | Publication date<br>(day/month/year) |
|---|---|---|---|
| JP 2016-40767 A | 24 March 2016 | (Family: none) | |
| JP 2021-93308 A | 17 June 2021 | (Family: none) | |
| JP 2008-10320 A | 17 January 2008 | US 2008/0176144 A1<br>paragraphs [0034]-[0172], fig.<br>2A, 2B<br>CN 101106196 A<br>KR 10-2008-0002651 A | |
| JP 2010-146900 A | 01 July 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016040767 A
- JP 2021093308 A